## Europäisches Patentamt

## European Patent Office

## Office européen des brevets

(11) Veröffentlichungsnummer: **0 124 746**

**A1**

(12) **EUROPÄISCHE PATENTANMELDUNG**

(21) Anmeldenummer: 84103353.3

(22) Anmeldetag: 27.03.84

(51) Int. Cl.³: **B 21 D 28/34**

(30) Priorität: 05.04.83 DE 3312233

(43) Veröffentlichungstag der Anmeldung:
14.11.84 Patentblatt 84/46

(84) Benannte Vertragsstaaten:
AT BE CH DE FR GB IT LI LU NL SE

(71) Anmelder: Ludwig Boschert GmbH & Co. KG
Maschinen- und Apparatebau
Mattenstrasse 1
D-7850 Lörrach-Hauingen(DE)

(72) Erfinder: Fazis, Harald
Läublinstrasse 26
D-7858 Weil(DE)

(74) Vertreter: Gauger, Hans-Peter, Dipl.-Ing.
Patentanwälte Dipl.-Ing.Hans-Jürgen Müller
Dipl.-Chem.Dr.Gerhard Schupfner Dipl.-Ing.Hans-Peter
Gauger Lucile-Grahn-Strasse 38
D-8000 München 80(DE)

(54) Stanzmaschine.

(57) Bei einer Stanzmaschine mit einem durch einen Stößel (1) bewegten Obermesser (4) und einem aus wenigstens drei Einselmessern (5, 6, 7) bestehenden Untermesser sind wenigstens zwei Einzelmesser (5, 6) des Untermessers an verstellbaren Messerhaltern (8, 9) des Arbeitstisches (3) befestigt, um damit die Schnittlänge von im wesentlichen rechteckigen Blechausschnitten unabhängig von der Blechstärke nur mit einem Auswechseln des Obermessers (4) verändern zu können.

Fig. 1

EP 0 124 746 A1

## Stanzmaschine

Die Erfindung bezieht sich auf eine Stanzmaschine der durch den Patentanspruch 1 angegebenen Gattung.

Bei einer aus der DE-PS 26 01 858 bekannten Stanzmaschine dieser Art sind in der Regel mehrere auswechselbare Werkzeugsätze bereit gestellt, die jeweils aus einem zur Befestigung an dem Stößel vorgesehenen Obermesser und einer zur Befestigung an einem Matrizenhalter des Arbeitstisches vorgesehenen Matrize bestehen, an welcher die Einzelmesser des Untermessers befestigt sind. Für eine Standardausrüstung einer solchen Stanzmaschine werden meistens wenigstens vier Werkzeugsätze bereit gestellt, die sich untereinander durch eine unterschiedliche Länge ihrer Messer unterscheiden, um damit im wesentlichen rechteckige Blechausschnitte von unterschiedlichen Standardlängen von beispielsweise 8, 50, 100 und 200 mm sowie einer übereinstimmenden Ausschnittstiefe von beispielsweise 100 mm erzeugen zu können. Die einzelnen Werkzeugsätze weisen dabei meistens noch einen integrierten und bezüglich des Obermessers federnd abgestützten Blechniederhalter auf, um mit einer entsprechend engen Anpassung von dessen Abmessungen an die Abmessungen des Obermessers optimale Abstreifverhältnisse an dem Schneidspalt zu erhalten, für dessen auf eine bestimmte Blechstärke bezogene Einstellung meistens noch eine besondere Zapfenführung vorgesehen ist, über welche bei jedem Werkzeugsatz dessen Obermesser mit dem Untermesser verbunden ist.

Wenn mit den bekannten Stanzmaschinen Blechausschnitte erzeugt werden müssen, die von solchen
Standardabmessungen abweichende Fertigungslängen
von beispielsweise 30 mm oder 80 mm haben, dann
wird dabei häufig aus Kostengründen davon abgesehen, dafür dann entsprechend dimensionierte
weitere Werkzeugsätze bereitzustellen. Zur Erzeugung von solchen Blechausschnitten mit abweichenden Fertigungslängen behilft man sich dann in der
Praxis vielmehr mit der Maßnahme, den eine kleinere
Schnittlänge von 8 mm bzw. 50 mm erzeugenden Werkzeugsatz montiert zu lassen, um dann mit einer stufenweise aufeinanderfolgenden Verstellung von für
die Werkstücke vorgesehenen Tischanschlägen die
Werkstücke am gleichen Blechausschnitt bis zum Vorliegen der gewünschten Fertigungslänge wiederholt zu
bearbeiten. Für eine Schnittlänge von 30 mm müssen
daher die Werkstücke bei Verwendung eines Werkzeugsatzes, der für die Erzeugung einer Schnittlänge
von nur 8 mm unter Berücksichtigung einer bestimmten Blechstärke eingerichtet ist, insgesamt viermal nachgefahren werden, was entsprechend hohe Bearbeitungskosten verursacht. Wenn unter Verwendung
desselben Werkzeugsatzes Ausschnitte an einer von
der Einstellung seines Schneidspaltes abweichenden
Blechstärke erzeugt werden sollen, dann ist es dabei noch zusätzlich erforderlich, daß auch die Einzelmesser des Untermessers in eine veränderte Relativlage zu den Schneidkanten des Obermessers an der
Matrize neu eingestellt werden, was ebenfalls ziemlich zeitaufwendig sein kann.

Die Erfindung, wie sie in den Patentansprüchen gekennzeichnet ist, löst die Aufgabe, eine Stanzmaschine der angegebenen Gattung bereitzustellen, die
ohne größere Werkzeugkosten verschieden große Schnittlängen und ggf. auch verschieden große Schnittiefen von Blechausschnitten unter Bereitstellung auch einer einfachen Anpassungsmöglichkeit des Schneidspaltes an unterschiedliche Blechstärken erzeugen läßt.

Die mit der Erfindung erzielbaren Vorteile liegen im wesentlichen darin, daß mit der für die Einzelmesser des Untermessers vorgesehenen Befestigung an verstellbaren Messerhaltern jetzt nur noch auswechselbare Obermesser unterschiedlicher Abmessungen für die Stanzmaschine bereit gestellt werden müssen, um mit deren Verwendung eine schnelle Umrüstung der Maschine auf unterschiedlich große Schnittlängen von Blechausschnitten zu ermöglichen. Mit jedem ausgewechselten Obermesser können dann die Einzelmesser des Untermessers durch eine Verstellung der Messerhalter sofort an die neue Schnittlänge angepaßt werden, wobei es auch möglich ist, bei einer Vornahme dieser Verstellung in einer durch den Stößel abgesenkten Relativlage des Obermessers unter Verwendung einer entsprechenden Lehre den Schneidspalt für jede in Frage stehende Blechstärke optimal einzustellen. Da die Herstellungskosten solcher auswechselbarer Obermesser im Vergleich zu einem gesamten Werkzeugsatz wesentlich niedriger sind, können damit die Bearbeitungskosten der Werkstücke drastisch verringert werden, zumal für die Umrüstung der Maschine auf unterschiedliche Schnittlängen der Blechausschnitte nur eine kurze Zeit benötigt wird. Die für die Einzelmesser des Untermessers vorgesehene Befestigung von Messerhaltern erlaubt dabei gleichzeitig auch eine einfache Umrüstung der Maschine für eine Erzeugung von Blechausschnitten, bei denen die beiden kurzen Schnittkanten nicht genau rechtwinklig zu der langen Schnittkante ausgerichtet sein sollen, sondern beispielsweise unter Verwendung eines mit der Ausrichtung seiner Schneidkanten entsprechend geformten Obermessers eine Ausrichtung unter einem abweichenden
Schnittwinkel aufweisen. Auch ist es damit möglich, in
Werkstücken außer einseitig offenen auch geschlossene
Blechausschnitte zu erzeugen, wenn dafür das Untermesser mit einem vierten Einzelmesser ergänzt wird.
Durch eine Befestigung des dritten Einzelmessers sowie
ggf. auch eines solchen vierten Einzelmessers ebenfalls
an verstellbaren Messerhaltern ist dann auch noch die
Möglichkeit einer einfachen Anpassung an verschieden
große Schnittiefen der Blechausschnitte gegeben. Durch
die Anordnung der Messerhalter in Nuten des Arbeitstisches kann im übrigen auf eine besondere Führung des
Obermessers gegenüber dem Untermesser verzichtet werden, weil dann die Vertikalführung des Stößels zur Einhaltung des Schneidspaltes beim Erzeugen der Blechausschnitte völlig ausreichend ist.

Ein Ausführungsbeispiel der erfindungsgemäßen Stanzmaschine ist in der Zeichnung schematisch dargestellt
und wird nachfolgend näher beschrieben. Es zeigt

Fig. 1                    einen Längsschnitt durch den
                          Stößel und den Arbeitstisch
                          einer Stanzmaschine zur Darstellung der Anordnung eines
                          aus einem Obermesser und einem
                          Untermesser bestehenden Werkzeugsatzes,

Fig. 2                    eine Draufsicht auf den Arbeitstisch der Stanzmaschine gemäß
                          Figur 1,

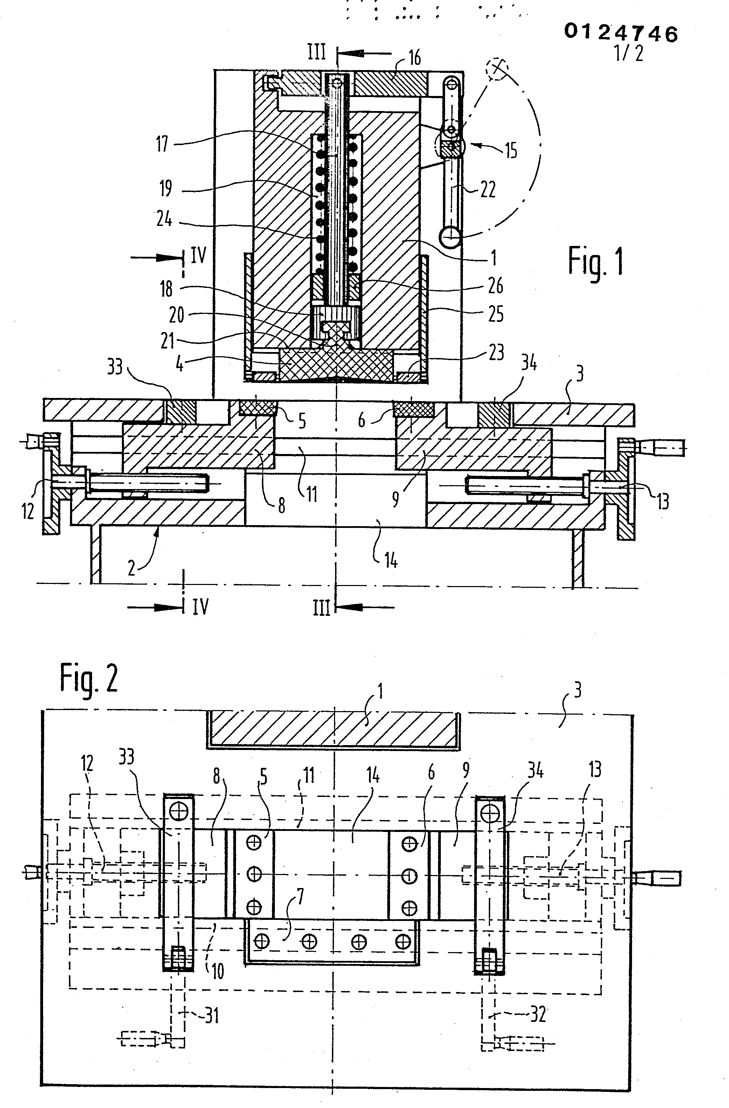

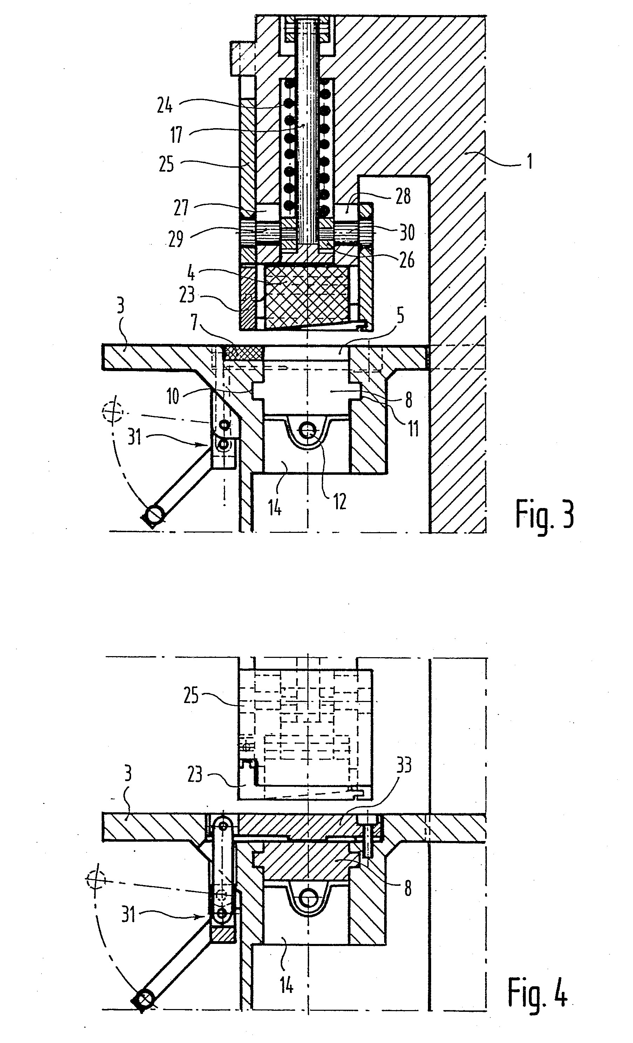

Fig. 3                          eine seitliche Schnittansicht
                                nach der Linie III - III in
                                Figur 1 und

Fig. 4                          eine Schnittansicht nach der
                                Linie IV - IV in Figur 1.


Die Stanzmaschine umfaßt einen vertikal beweglichen
Stößel 1, der bezüglich des Maschinengestells 2, das
einen Arbeitstisch 3 bildet, eine nicht näher dargestellte Axialführung aufweist. An dem Stößel 1 ist
das Obermesser 4 eines Stanzwerkzeuges auswechselbar
befestigt, dessen Untermesser für ein Ausstanzen von
rechteckigen Blechausschnitten mit einer langen und
zwei kurzen Schnittkanten aus drei Einzelmessern 5,6
und 7 besteht. Die beiden für die kurzen Schnittkanten solcher rechteckiger Blechausschnitte vorgesehenen Einzelmesser 5 und 6 sind jeweils mit einem Messerhalter 8 und 9 verschraubt. Die beiden Messerhalter sind als in Nuten 10 und 11 des Arbeitstisches 3
geführte Schlitten ausgebildet und können mittels
eines jeweiligen Spindelantriebes 12 und 13 relativ
zueinander und längs des Einzelmessers 7 verstellt
werden, das in einer Messeraufnahme direkt mit dem
Arbeitstisch 3 verschraubt ist.


An dem Obermesser 4 sind wenigstens drei zu den Einzelmessern 5,6 und 7 des Untermessers korrespondierende Schneidkanten ausgebildet. Bezüglich dieser
Schneidkanten des Obermessers 4 sind die Einzelmesser des Untermessers unter Einhaltung eines für jede Blechstärke vorbestimmten Schneidspaltes an einer
für die Stanzabfälle vorgesehenen Öffnung 14 des Arbeitstisches 3 angeordnet. Das Obermesser 4 ist an
einem über den Arbeitstisch 3 auskragenden Arm des
Stößels 1 befestigt. Um das Obermesser schnell auswechseln zu können, ist an diesem auskragenden Arm des Stößels eine Knebelgriffanordnung 15 vorgesehen, mittels welcher über einen Verbindungslenker 16 und eine Betätigungsstange 17 ein Werkzeughalter 18 längs einer Aussparung 19 verschoben werden kann. Das Obermesser 4 ist mittels eines Vorsprunges 20 so in einer Gleitführung des Werkzeughalters 18 gehalten, daß es in der in Figur 1 dargestellten Schwenklage des Knebelgriffes 22 der Knebelgriffanordnung 15 gegen eine Berührungsfläche 21 an dem auskragenden Arm des Stößels 1 angezogen ist. Wird der Knebelgriff 22 entsprechend der strichpunktierten Linie in die obere Schwenklage gebracht, dann wird dadurch das Obermesser 4 von dieser Berührungsfläche 21 so weit gelöst, daß es mit seinem Vorsprung 20 längs der Gleitführung des Werkzeughalters 18 nach der Seite herausgezogen werden kann. Ein neues Obermesser kann dann über einen entsprechenden Haltevorsprung in die Gleitführung des Werkzeughalters 18 eingeschoben und danach durch Verschwenken des Knebelgriffs 22 nach unten gegen die Berührungsfläche 21 angezogen werden.

Für die Stanzmaschine sind mehrere auswechselbare Obermesser 4 bereit gestellt, die sich untereinander nur in der Länge ihrer Schneidkanten sowie ggf. auch in der wechselseitigen Ausrichtung dieser Schneidkanten unterscheiden. Jedem auswechselbaren Obermesser ist für das Niederhalten der Werkstücke am Arbeitstisch 3 während des Ausstanzens ein eigener Blechniederhalter zugeordnet. Der Blechniederhalter ist als ein dem jeweiligen Verlauf der Schneidkanten des Obermessers 4 folgender Abstreifer 23 ausgebildet, der eine leicht lösbare Schnappverbindung mit einem durch eine Feder 24 abgestützten Halteblech 25 aufweist. Die Feder 24 wird innerhalb der Aussparung 19 durch die Betätigungsstange 17 der Knebelgriffanordnung 15 zentriert und wirkt auf ein Gleitstück 26 ein, mit welchem das an dem auskragenden Arm des Stößels 1 anliegende Halteblech 25 über in Längsschlitzen 27 und 28 geführte Zapfen 29 und 30 verbunden ist. Wenn der Stößel 1 seine in der Zeichnung dargestellte obere Endlage einnimmt, dann wird der Abstreifer 23 durch die Feder 24 in eine über die Schneidkanten des Obermessers 4 vorstehende Anordnung vorgespannt. Die Zapfen 29 und 30 sind dann an das untere Ende ihrer Führungsschlitze 27 und 28 angeschlagen. Wenn der Stößel 1 zum Ausstanzen eines Blechausschnittes aus einem auf den Arbeitstisch 3 aufgelegten Werkstück nach unten bewegt wird, dann wird dabei zuerst der Abstreifer 23 in der unmittelbaren Nähe des Schneidspaltes zum Aufsetzen auf das Werkstück gebracht. Nachfolgend wird dann das Obermesser 4 in die Öffnung 14 des Arbeitstisches 3 vorgeschoben, wobei seine Schneidkanten im Zusammenwirken mit den Einzelmessern 5,6 und 7 des Untermessers den Blechausschnitt ausstanzen können. Während dieses Ausstanzens wird der Abstreifer 23 durch die Feder 24 gegen das Werkstück angedrückt, während gleichzeitig die Zapfen 29 und 30 jetzt längs ihrer Führungsschlitze 27 und 28 nach oben verschoben werden. Weil jedem Obermesser 4 ein bei einem Auswechseln zuvor entfernbarer eigener Abstreifer 23 als Blechniederhalter zugeordnet ist, wird dadurch unabhängig von der Blechstärke der Werkstücke die Schnittqualität der Blechausschnitte entsprechend günstig beeinflußt.

Wenn die Stanzmaschine auf eine andere Schnittlänge von Blechausschnitten umgerüstet werden soll, dann muß dafür nur das Obermesser 4 mit seinem Abstreifer 23 gegen das diese andere Schnittlänge aufweisende Obermesser mit zugeordnetem Abstreifer ausgewechselt werden. Weiterhin sind noch die beiden an den Messerhaltern 8 und 9 befestigten Einzelmesser 5 und 6 des Untermessers durch Betätigung der beiden Spindelantriebe 12 und 13 auf die neue Schnittlänge zu verstellen. Für diese Verstellung sind zuerst zwei Knebelgriffanordnungen 31 und 32 zu lösen, mittels welcher die beiden Messerhalter 8 und 9 normal an dem Arbeitstisch 3 unter der Einwirkung von Druckstücken 33 und 34 festgestellt werden können. Um in Abhängigkeit von der Blechstärke der Werkstücke die Größe des Schneidspaltes optimal einstellen zu können, wird dann das ausgetauschte Obermesser 4 mit einer Abwärtsbewegung des Stößels 1 in die Öffnung 14 des Arbeitstisches 3 abgesenkt, um dann noch vor der erneuten Betätigung der beiden Knebelgriffanordnungen 31 und 32 die beiden Einzelmesser 5 und 6 durch eine Betätigung der beiden Spindelantriebe 12 und 13 gegen das Obermesser 4 auf die gewünschte Größe des Schneidspaltes unter Verwendung einer für die Blechstärke maßgeblichen Lehre einstellen zu können. Wenn diese Einstellung abgeschlossen ist, dann werden die Messerhalter 8 und 9 mittels der Knebelgriffanordnungen 31 und 32 an dem Arbeitstisch 3 festgestellt.

Die beiden Spindelantriebe 12 und 13 für die Messerhalter 8 und 9 können alternativ oder zusätzlich auch mit Meßskalen versehen sein, um damit die Einzelmesser 5 und 6 in jede neue Relativlage präzise einstellen zu können. Alternativ kann für die Messerhalter auch ein hydraulischer oder pneumatischer Antrieb vorgesehen sein. Weil die Einzelmesser 5 und 6 eine auswechselbare Befestigung an den Messerhaltern 8 und 9 aufweisen, können sie auf einfache Weise nachgeschliffen und auch gegen Messer ausgetauscht werden, die eine zu dem Einzelmesser 7 schiefe Ausrichtung ihrer Schneidkante ergeben. Wenn die Stanzmaschine auch eine veränderliche Anpassung an unterschiedliche Schnittiefen von Blechausschnitten ergeben soll, dann ist es dazu nur erforderlich, auch für das Einzelmesser 7 des Untermessers eine Befestigung an einem verstellbaren Messerhalter des Arbeitstisches vorzusehen. Schließlich kann das Untermesser auch noch durch ein viertes Einzelmesser mit einer unmittelbaren Befestigung an dem Arbeitstisch oder ebenfalls mit einer mittelbaren Befestigung an einem verstellbaren Messerhalter umfassen, um damit im Zusammenwirken mit einer dann auch für das zugeordnete Obermesser vorgesehenen vierten Schneidkante Blechausschnitte ausstanzen zu können, die eine geschlossene Schnittkante aufweisen.

0124746

Patentansprüche

1. Stanzmaschine mit einem durch einen Stößel (1) bewegten Obermesser (4) und einem am Arbeitstisch (3) befestigten Untermesser, das zum Ausstanzen von im wesentlichen rechteckigen Blechausschnitten mit wenigstens einer langen und zwei kurzen Schnittkanten aus mindestens drei Einzelmessern (5,6,7) besteht, die über einen Schneidspalt mit an dem Obermesser (4) ausgebildeten Schneidkanten zusammenarbeiten, dadurch g e k e n n - z e i c h n e t , daß wenigstens die beiden für die kurzen Schnittkanten von Blechausschnitten vorgesehenen Einzelmesser (5,6) des Untermessers an Messerhaltern (8,9) befestigt sind, die längs dem für die lange Schnittkante der Blechausschnitte vorgesehenen dritten Einzelmesser (7) verstellbar sind.

2. Stanzmaschine nach Anspruch 1, dadurch g e - k e n n z e i c h n e t , daß jeder Messerhalter (8,9) als ein in Nuten (10,11) des Arbeitstisches (3) geführter und durch einen Stellantrieb, wie insbesondere einen Spindelantrieb (12,13), verstellbarer Schlitten ausgebildet ist.

3. Stanzmaschine nach Anspruch 1 oder 2, dadurch g e k e n n z e i c h n e t , daß jeder Messerhalter (8,9) durch eine Knebelgriffanordnung (31,32) an dem Arbeitstisch (3) feststellbar ist.

III ← 16

17

19

24

→ IV

18
20
21
4

33

12

2

III

IV →

5

6

8 11

9

13

14

1

26
25
23

34 3

Fig. 1

15
22

III ←

Fig. 2

1 3

12 33

8 5 11 14 6 9 34 13

7

10

31 32

Fig. 3

Fig. 4

| Europäisches Patentamt | **EUROPÄISCHER RECHERCHENBERICHT** | |
|---|---|---|

| **EINSCHLÄGIGE DOKUMENTE** | | | EP 84103353.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>EP - A2 - 0 054 395</u> (CHLORIDE GROUP) <br> * Gesamt * <br><br> -- | 1 | B 21 D 28/34 |
| A | <u>DE - B2 - 1 900 012</u> (HOUDAILLE) <br> * Gesamt * <br><br> ---- | 1,3 | |

**RECHERCHIERTE SACHGEBIETE (Int. Cl. ³)**

B 21 D 28/00

Der vorliegende Recherchenbericht wurde für alle Patentansprüche erstellt.

| Recherchenort | Abschlußdatum der Recherche | Prüfer |
|---|---|---|
| WIEN | 03-07-1984 | DRNOWITZ |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, übereinstimmendes Dokument

EPA Form 1503. 03.82